# EUROPEAN PATENT APPLICATION

(11) **EP 4 635 919 A1**
(43) Date of publication of application: **22.10.2025**
(21) Application number: 23903857.3
(22) Date of filing: 01.12.2023
(51) Int. Cl.: C02F 1/58, C02F 1/66, C02F 1/52, C02F 103/08

(54) **METHOD OF REMOVING MAGNESIUM IN BRINE**

(30) Priority: 13.12.2022 KR 20220173789
(71) Applicant: POSCO Holdings Inc., Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: KANG, Hee-Soo, Pohang-si, Gyeongsangbuk-do 37673 (KR); CHOI, Soo Je, Pohang-si, Gyeongsangbuk-do 37611 (KR); KUK, Seung Taek, Pohang-si, Gyeongsangbuk-do 37671 (KR); PARK, Jae Sin, Pohang-si, Gyeongsangbuk-do 37673 (KR); YANG, Heok, Pohang-si, Gyeongsangbuk-do 37655 (KR); PARK, Woonkyoung, Pohang-si, Gyeongsangbuk-do 37834 (KR)
(74) Representative: Pfenning, Meinig & Partner mbB
(86) International application number: PCT/KR2023/019730
(87) International publication number: WO 2024/128654

(57) **Abstract**

The present embodiments relate to a method of removing Mg in brine, and more particularly, provide a method of removing Mg in brine including preparing concentrated brine; forming a precipitate with a controlled particle diameter by stepwise inputting an alkaline solution into the concentrated brine; and separating the precipitated precipitate.

## Description

### CROSS-REFERENCE TO RELATED APPLICATION

This application claims priority to and the benefit of Korean Patent Application No. 10-2022-0173789 filed in the Korean Intellectual Property Office on December 13, 2022, the entire contents of which are incorporated herein by reference.

### BACKGROUND OF THE INVENTION

### (a) Field of the Invention

These embodiments relate to a method of removing Mg in brine, and more particularly, to a method of removing Mg in brine by stepwise inputting an alkaline material into brine and controlling a particle diameter of a precipitated precipitate.

### (b) Description of the Related Art

Lithium compounds are used for a variety of purposes across various industries, including secondary batteries, ceramics, glass, alloys, pharmaceuticals, etc. With the recent commercialization of electric vehicles and the increasing need for power storage, demand for lithium materials is also expected to grow significantly in the future.

Raw materials for preparing lithium materials include mineral, brine, sea water, etc. Among these, ores are spodumene, petalite, lepidolite, etc., and contain a relatively large amount of lithium, approximately 1 to 1.5%, but since mineral should go through many processes such as flotation, high-temperature calcination, grinding, acid mixing, extraction, purification, concentration, and precipitation in order to extract lithium from the mineral, there is a problem in that a recovery procedure is complicated, it costs a lot of money due to high energy consumption, and environmental pollution is severe due to the use of acid while extracting the lithium.

In addition, it is known that a total of 2.5 × 10¹¹ tons of lithium is dissolved in seawater. A technology of extracting lithium by putting a recovery device containing an adsorbent into seawater to selectively adsorbing the lithium and then treating the adsorbed lithium with acid is mainly used, but since a concentration of lithium contained in seawater is only 0.17 ppm, it is very inefficient to extract the lithium from the seawater, causing a problem of low economic efficiency.

Due to these problems, lithium is currently mainly extracted from brine. The brine is produced from natural salt lakes, and more than 70% of the world's reserves are distributed in South America, including Argentina, Chile, Bolivia, etc.

Among lithium-containing brine, a concentration of lithium in commercially developed brine is about 0.3 g/L to 2 g/L, and salts such as Mg, Ca, B, Na, K, and SO₄ other than lithium are dissolved together.

The lithium contained in brine is mainly extracted in the form of lithium carbonate. In the commercialized process, in order to extract the lithium in the form of the lithium carbonate from the lithium-containing brine, a method of recovering lithium by drilling a tube well in a natural salt lake at an altitude of more than 3,000 meters above sea level, pumping brine and trapping the brine into evaporation ponds, naturally evaporating the brine over a long period of time, approximately several months to a year to concentrate the lithium several times to several tens of times, precipitating and removing impurities such as Mg, Ca, and B, and precipitating the lithium in an amount exceeding solubility of the lithium carbonate has been used. However, this conventional method has a problem in that it takes a lot of energy and time to evaporate and concentrate brine, greatly reducing productivity, lithium is precipitated in the form of salt along with other impurities during the evaporation and concentration of the brine, resulting in loss of the lithium, and use is restricted during the rainy season. In addition, lithium is co-precipitated together during a solid-liquid separation process of Mg and Ca to remove impurities, thereby reducing a lithium recovery rate. Not only is it difficult to utilize Mg and Ca as resources due to the cumbersome work of separating the Mg and Ca again as the Mg and Ca are mixed and precipitated together, but the amount of precipitate produced to remove the Mg and Ca is large, causing various problems during the solid-liquid separation process.

In order to solve the above problems, a process of concentrating brine only to about 4g/L, removing Mg, Ca, etc., inputting NaOH and phosphoric acid to recover lithium phosphate, and then preparing lithium hydroxide through subsequent electrolysis and crystallization has been developed.

However, one of the biggest problems during preparing lithium compounds from the brine is the process of removing Mg contained in the concentrated brine. In most brine resources, Mg is contained in a much larger amount than Li, so the amount of precipitate produced during the removal of Mg is greater than the production of Li, the final product, and the particle diameter of the Mg precipitate produced is fine and highly cohesive. The subsequent solid-liquid separation process is not carried out smoothly, causing a problem that significantly reduces the productivity of the entire plant.

Therefore, there is a need to develop a technology of removing magnesium in brine that can effectively separate the Mg component contained in concentrated brine and smoothly perform the solid-liquid separation process.

### SUMMARY OF THE INVENTION

The present disclosure attempts to provide a method of removing Mg in brine. Specifically, the present disclosure attempts to provide a method of removing Mg in brine capable of controlling a particle diameter of a precipitated precipitate by stepwise inputting an alkaline material.

According to an embodiment of the present invention, a method of removing Mg in brine includes: preparing concentrated brine; precipitating a precipitate with a controlled particle diameter by stepwise inputting an alkaline material into the concentrated brine; and separating the precipitated precipitate.

The precipitating of the precipitate with the controlled particle diameter by stepwise inputting the alkaline material into the concentrated brine may include a first step of inputting the alkaline material and a second step of inputting the alkaline material, and in the first step and the second step, the alkaline material may be input at a ratio ranging from 1:0.5 to 1:20 on a molar basis.

In the precipitating of the precipitate with the controlled particle diameter by stepwise inputting the alkaline material into the concentrated brine, in a particle diameter distribution of the precipitate, a particle diameter D10 at which a cumulative volume is 10% may range from 7.0 µm to 9.0 µm.

In the precipitating of the precipitate with the controlled particle diameter by stepwise inputting the alkaline material into the concentrated brine, in the particle diameter distribution of the precipitate, a spread D50/D10 may range from 3 to 4.

In the preparing of the concentrated brine, a concentration of a lithium (Li) component may range from 0.5 g/L to 20 g/L, a concentration of a magnesium (Mg) component may range from 2g/L to 40g/L, and brine with a concentration ratio of a sulfur (S) component and the (Mg) component ranging from 0.5 to 2 may be prepared.

In the separating of the precipitated precipitate, the concentration of Mg component in the brine from which the precipitate is separated may be 0.003 g/L or less.

After the first step of inputting the alkaline material, a pH value may range from 8 to 9.5, and after the second step of inputting the alkaline material, a pH value may range from 11 to 12.

In the precipitating of the precipitate with the controlled particle diameter by stepwise inputting the alkaline material into the concentrated brine, the alkaline material may be a calcium-containing material.

According to an embodiment of the present invention, it is possible to improve an Mg removal rate in brine.

According to an embodiment of the present invention, it is possible to extend a service life of a solid-liquid separation device that separates a precipitated precipitate and improve economic efficiency of the entire process.

### BRIEF DESCRIPTION OF THE DRAWINGS

FIG. 1 is a diagram schematically illustrating a method of removing Mg in brine according to an embodiment of the present invention.
FIG. 2 is an SEM image of a precipitated precipitate according to Example 4 of the present invention.
FIG. 3 is an SEM image of a precipitated precipitate according to Comparative Example 2 of the present invention.

### DETAILED DESCRIPTION OF THE EMBODIMENTS

In the description of the present invention, the terms first, second, third, and the like are used to describe, but are not limited to, various parts, components, areas, layers and/or sections. These terms are used only to distinguish a part, component, region, layer, or section from other parts, components, regions, layers, or sections. Accordingly, a first part, a component, an area, a layer, or a section described below may be referred to as a second part, a component, a region, a layer, or a section without departing from the scope of the present disclosure.

Terminologies used herein are to mention only a specific Example, and do not to limit the present invention. Singular forms used herein include plural forms as long as phrases do not clearly indicate an opposite meaning. A term "including" used in the present specification concretely indicates specific properties, regions, integer numbers, steps, operations, elements, and/or components, and is not to exclude presence or addition of other properties, regions, integer numbers, steps, operations, elements, and/or components.

When a part is referred to as being "above" or "on" other parts, it may be directly above or on other parts, or other parts may be included in between. In contrast, when a part is referred to as being "directly above" another part, no other part is involved in between.

All terms including technical terms and scientific terms used herein have the same meaning as the meaning generally understood by those skilled in the art to which the present invention pertains unless defined otherwise. Terms defined in commonly used dictionaries are additionally interpreted as having meanings consistent with related technical literature and currently disclosed content, and are not interpreted in ideal or very formal meanings unless defined.

Hereinafter, embodiments of the present invention will be described in detail. However, it is to be understood that this exemplary embodiment is provided as an example, and the present invention is not limited by this exemplary embodiment, but is defined by only the scope of claims to be described below.

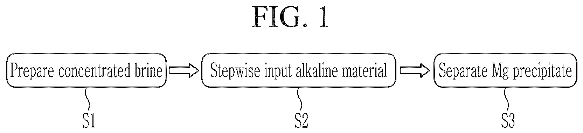

FIG. 1 is a diagram schematically illustrating a method of removing Mg in brine according to an embodiment of the present invention.

Referring to FIG. 1, the method of removing Mg in brine according to an embodiment of the present invention may include preparing the concentrated brine (S1), stepwise inputting an alkaline material (S2), and separating a precipitated precipitate (S3).

First, in the step (S1) of preparing the concentrated brine, the concentrated brine containing lithium and having a pH ranging from 5.5 to 7.5 may be prepared. The concentration of lithium (Li) component in the concentrated brine may range from 0.5 g/L to 20 g/L, the concentration of magnesium (Mg) component may range from 2 g/L to 40 g/L, and the concentration of calcium (Ca) component may be 1 g/L or less. Meanwhile, the concentration ratio of the sulfur (S) component and the magnesium (Mg) component may range from 0.1 to 3.0, and specifically may range from 0.5 to 2.0.

The step (S2) of stepwise inputting an alkaline solution may be a step of precipitating a precipitate by stepwise inputting an alkaline material into the concentrated brine, and specifically, may be a step of precipitating a precipitate with a controlled particle diameter.

The alkaline material may be oxide or hydroxide containing one or more selected from sodium (Na), potassium (K), or calcium (Ca), and specifically, may be calcium (Ca) oxide or calcium (Ca) hydroxide.

When the alkaline material is input into the concentrated brine, the magnesium (Mg) component contained in the concentrated brine may form a magnesium hydroxide (Mg(OH)₂) precipitate.

Meanwhile, when the alkaline material containing calcium (Ca) is input into the concentrated brine, the reaction represented by the following chemical formula may occur.

Ca²⁺(aq)+2OH⁻¹(aq)+Mg²⁺(aq)+SO₄²⁻(aq)+2H₂O(I)→Mg (OH)₂(s)+CaSO₄·2H₂O(s) 1

As described above, slurry may be formed by inputting a calcium-containing material into the concentrated brine. In the initial low pH range, the calcium sulfate (CaSO₄) precipitate is mainly precipitated, and as the pH value increases, the magnesium hydroxide (Mg(OH)₂) precipitate is precipitated and the precipitated amount gradually increases. In order to improve a removal rate of magnesium (Mg) component, which is an impurity in the brine, the input amount and reaction time of the alkaline materials should be controlled so that the pH value is 11 or higher.

Specifically, various types of calcium sulfate (CaSO₄) precipitates such as a needle shape and a plate shape having a coarse size are precipitated in a low pH region, and as the input amount of calcium-containing alkaline material increases, the pH value of the slurry also gradually increases. When the pH value is 9.5 or more, a cross-reaction occurs between calcium sulfate (CaSO₄), calcium hydroxide (Ca(OH)₂), and magnesium hydroxide (Mg(OH)₂). Therefore, particles of the coarse calcium sulfate (CaSO₄) precipitate produced in the low pH region are refined, and the production of fine particle-sized calcium hydroxide (Ca(OH)₂) and magnesium hydroxide (Mg(OH)₂) may proceed actively. Meanwhile, as the pH value increases, the tendency of the precipitates to become finer may be accelerated. The fine precipitates adhere to pores of a filter cloth of a filtration device for separating the subsequent precipitates, causing a clogging phenomenon. Therefore, it not only lowers the filtration rate of the filtration device and shortens a service life of the filter cloth, but also becomes the main cause of lowering the operating efficiency of the entire process.

In order to solve the above problems, in an embodiment of the present invention, the alkaline material may be divided into two or more steps and input into the concentrated brine. Specifically, it may include a first step of inputting the alkaline material and a second step of inputting the alkaline material, and in the first step and the second step, the alkaline material may be input at a ratio ranging from 1:0.5 to 1:20. When the alkaline materials are input within the above range, the magnesium removal efficiency in brine may not only be improved, but also the particle diameter of the precipitated precipitate may be controlled to the desired range, which is advantageous of preventing a decrease in separation rate in the subsequent precipitate separation step and shortening the service life of the precipitate separation device.

By dividing the alkaline materials into the first step and the second step and inputting the alkaline materials as described above, the pH value of the concentrated brine containing the alkaline material in the first step is controlled to range from 8 to 9.5, and the pH of the concentrated brine containing the alkaline material in the second step is controlled to range from 11 to 12. In this way, by lowering the pH of the starting step compared to the existing process, calcium sulfate (CaSO₄) nucleation is induced more actively at the beginning of the reaction, and the time for reaction particles to grow in a relatively low pH area increases compared to the existing process, and after the reaction is terminated, there is an advantage of increasing the size of particles remaining in the final slurry.

In an embodiment of the present invention, the alkaline material may be input in the range of 1.2 to 2.0 times, and specifically, 1.5 times to 1.7 times the theoretically calculated value of the alkaline component required for the magnesium (Mg) component contained in the concentrated brine to be completely converted into the magnesium hydroxide (Mg(OH)₂). In other words, the alkaline material may be input in the range of 1.2 to 2.0 equivalents of the theoretical value of the alkaline material, specifically in the range of 1.5 to 1.7 equivalents.

Meanwhile, the alkaline material may be input into the concentrated brine and stirred for a predetermined time. Specifically, after inputting the alkaline material in the first step, the alkaline material may be stirred for 10 minutes to 1 hour, and after inputting the alkaline material in the second step, the alkaline material may be stirred for 30 minutes to 3 hours. In addition, the stirring time after inputting the alkaline material in the second step may be 2 to 3 times the stirring time after inputting the alkaline material in the first step. This is advantageous of effectively precipitating magnesium while controlling the particle diameter of the precipitated precipitate.

The precipitated precipitate by inputting the alkaline material into the concentrated brine may have a particle diameter D10 ranging from 7.0 µm to 9.0 µm, which becomes 10% of the cumulative volume in the particle size distribution, and a spread D50/D10 may range from 3 to 4.

Next, in the step (S3) of separating the precipitate, the precipitate is separated using the filter cloth of the filtration separation device, and a brine filtrate from which magnesium has been removed may be obtained. The filtration device or filter cloth may be a filtration device or filter cloth used in a normal process of recovering lithium in brine or a process for removing impurities, and is not particularly limited.

Meanwhile, in the step (S3) of separating the precipitate , the concentration of magnesium (Mg) component in the brine filtrate remaining after separating the precipitate may be 0.003 g/L or less.

Hereinafter, Examples and Comparative Examples of the present invention will be described. However, the following Examples are only exemplary embodiments of the present disclosure, and the present invention is not limited to the following Examples.

First, a concentrated brine containing components shown in Table 1 below was prepared.

**[Table 1]**

| Division | Concentration of component (g/L) | | | | | | | pH | Concentration ratio of S/Mg |
|---|---|---|---|---|---|---|---|---|---|
| | Li | S | Ca | Mg | B | Na | K | | |
| Concentrated brine 1 | 1.78 | 5.41 | 0.53 | 3.84 | 1.32 | 18.54 | 104.4 4 | 6.8 | 1.41 |
| Concentrated brine 2 | 3.68 | 9.87 | 0.22 | 8.22 | 2.69 | 34.79 | 83.66 | 6.6 | 1.20 |
| Concentrated brine 3 | 5.8 | 17.66 | 0.11 | 14.67 | 4.66 | 37.83 | 57.35 | 6.2 | 1.20 |
| Concentrated brine 4 | 7.61 | 23.09 | 0.09 | 17.89 | 6.12 | 39.4 | 60.43 | 6 | 1.29 |

### (Example 1)

Concentrated brine 2 in Table 1 was used as a raw material, Ca(OH)₂ was used as an alkaline material, and Ca(OH)₂ was input into the concentrated brine 2 by being divided into two steps. The total amount of Ca(OH)₂ that is divided into the above two steps and input into the concentrated brine 2 is 1.6 times (1.6 equivalents) a theoretically calculated value of Ca(OH)₂ required when all the Mg components contained in the concentrated brine 2 react with Mg(OH)₂.

Here, in the first step, 0.1 times (0.1 equivalents) of the theoretically calculated value of Ca(OH)₂ was input and then Ca(OH)₂ was stirred for 30 minutes, and in the second step, 1.5 times (1.5 equivalents) the theoretically calculated value of Ca(OH)₂ was input and then Ca(OH)₂ was stirred for 1 hour and 30 minutes, the reaction was terminated. After the termination of the reaction, the final product from which the precipitate is precipitated was separated into solid and liquid phases using a pressurized solid-liquid separation device, and an experiment to remove Mg in the concentrated brine was performed.

### (Examples 2 to 5)

An experiment to remove Mg in concentrated brine was performed in the same manner as in Example 1, except that in the first step, Ca(OH)₂ was input at 0.3 equivalents (Example 2), 0.5 equivalents (Example 3), 0.7 equivalents (Example 4), and 0.9 equivalents (Example 5) of the theoretically calculated value, respectively, and in the second step, Ca(OH)₂ was input at 1.3 equivalents (Example 2), 1.1 equivalents (Example 3), 0.9 equivalents (Example 4), and 0.7 equivalents (Example 5) of the theoretically calculated value, respectively.

### (Examples 6 to 8)

An experiment to remove Mg in concentrated brine was performed in the same manner as in Example 3, except that the concentrated brine 1, the concentrated brine 3, and the concentrated brine 4 in Table 1 were used.

### (Examples 9 to 11)

An experiment to remove Mg in concentrated brine was performed in the same manner as in Example 5, except that the concentrated brine 1, the concentrated brine 3, and the concentrated brine 4 in Table 1 were used.

### (Comparative Examples 1 to 4)

The concentrated brines 1 to 4 in Table 1 were each used as the concentrated brine of raw materials, and Ca(OH)₂ was used as the alkaline material. After 1.6 times (1.6 equivalents) the theoretically calculated value of Ca(OH)₂ required when all of the Mg components contained in each concentrated brine react with Mg(OH)₂ were input, and Ca(OH)₂ was stirred for 2 hours, and then the reaction was terminated. After the termination of the reaction, the final product from which the precipitate is precipitated was separated into the solid and liquid phases using the pressurized solid-liquid separation device.

According to Examples 1 to 11 and Comparative Examples 1 to 3, the final product produced after the termination of the reaction was sampled and analyzed using the particle size of the precipitated precipitate, which was summarized in Table 2 below. In the present invention, the analysis of the particle size of the precipitate was conducted by using Mastersizer 3000 from Malvern and inputting slurry sampled by a wet laser particle size analysis method.

In addition, according to Examples 1 to 11 and Comparative Examples 1 to 3, the weight of the final product produced after the termination of the reaction is measured, and then the filtration rate is calculated by dividing the time required to completely separate the final product into the solid phase and the liquid phase and the area of the filter cloth of the pressurized solid-liquid separation device, which were summarized in Table 2.

Through the pressurized solid-liquid separation device, the liquid material is collected by a separate collection device, and the solid material remains in the form of the cake on the surface of the filter cloth. The cake may receive a certain amount of impact to be detached from the filter cloth. In this case, the detachability of the cake was evaluated by observing the microstructure of the surface of the filter cloth from which the cake was detached.

The detachability was evaluated as Δ: average, ∘: good, and ⊚: very good.

The detachability of the cake was relatively compared by visually observing whether the cake was well separated from the surface of the filter cloth when removing the cake from the surface of the filter cloth after completing the solid-liquid separation. When cake particles were attached to the surface of the filter cloth, the detachability was determined as below average. When the cake was removed smoothly and there was almost no residue on the surface of the filter cloth, the detachability was determined as good. After the cake was removed, when there is no residue on the surface of the filter cloth and there are no traces of the cake attached to the surface of the filter cloth, the detachability was determined as very good.

In addition, the residual concentration of Mg of the filtrate separated using the pressurized solid-liquid separation device was measured through ICP analysis.

**[Table 2]**

| | Conc entrat | Conc entrati | Conc entrat | Total input | Input method of | Input equival | Filtra te | Particl e size | Parti cle | Filtrati on | Filtratio n rate | Cake detac |
|---|---|---|---|---|---|---|---|---|---|---|---|---|
| | ion of Li (g/L) | on of Mg (g/L) | ed brine pH | equival ent of Ca(OH) 2 | Ca(OH)₂ | ence ratio of Ca(OH) 2 | Mg conc entra tion (g/L) | (D10) | size (D5 0) | rate (kg/( m²·h)) | improv ement rate (%) | habilit y |
| Compar ative Exampl e 1 | 1.78 | 3.84 | 6.8 | 1.6 | One-time total amount input | - | <0.0 03 | 5.9 | 25.6 | 10,12 9 | - | Δ |
| Compar ative Exampl e 2 | 3.68 | 8.36 | 6.6 | 1.6 | One-time total amount input | - | <0.0 03 | 6.2 | 26.8 | 2,505 | - | Δ |
| Compar ative Exampl e 3 | 5.80 | 14.67 | 6.2 | 1.6 | One-time total amount input | - | <0.0 03 | 5.8 | 24.8 | 6,031 | - | Δ |
| Compar ative Exampl e 4 | 7.61 | 17.89 | 6 | 1.6 | One-time total amount input | - | <0.0 03 | 6.1 | 25.4 | 3,016 | - | Δ |
| Exampl e 1 | 3.68 | 8.36 | 6.6 | 1.6 | Two-time divided input | 0.1 +1.5 | <0.0 03 | 7.9 | 27.4 | 3,262 | 30.2 | ○ |
| Exampl e 2 | 3.68 | 8.36 | 6.6 | 1.6 | Two-time divided input | 0.3+1.3 | <0.0 03 | 7.8 | 27.2 | 3,901 | 55.7 | ⊚ |
| Exampl e 3 | 3.68 | 8.36 | 6.6 | 1.6 | Two-time divided input | 0.5+1.1 | <0.0 03 | 8 | 27.8 | 4,158 | 66.0 | ⊚ |
| Exampl e 4 | 3.68 | 8.36 | 6.6 | 1.6 | Two-time divided input | 0.7+0.9 | <0.0 03 | 8.2 | 28.3 | 4,365 | 74.3 | ⊚ |
| Exampl e 5 | 3.68 | 8.36 | 6.6 | 1.6 | Two-time divided input | 0.9+0.7 | <0.0 03 | 7.8 | 27.3 | 3,697 | 47.6 | ○ |
| Exampl e 6 | 1.78 | 3.84 | 6.8 | 1.6 | Two-time divided input | 0.5+1.1 | <0.0 03 | 8.1 | 27.7 | 15,48 5 | 52.9 | ○ |
| Exampl e 7 | 5.80 | 14.67 | 6.2 | 1.6 | Two-time divided input | 0.5+1.1 | <0.0 03 | 7.9 | 27.4 | 9,819 | 62.8 | ⊚ |
| Exampl e 8 | 7.61 | 17.89 | 6 | 1.6 | Two-time divided input | 0.5+1.1 | <0.0 03 | 8.3 | 28.1 | 4,418 | 46.5 | ⊚ |
| Exampl e 9 | 1.78 | 3.84 | 6.8 | 1.6 | Two-time divided input | 0.9+0.7 | <0.0 03 | 7.9 | 27.1 | 13,91 2 | 37.3 | ○ |
| Exampl e 10 | 5.80 | 14.67 | 6.2 | 1.6 | Two-time divided input | 0.9+0.7 | <0.0 03 | 7.5 | 26.9 | 8,392 | 44.1 | ○ |
| Exampl e 11 | 7.61 | 17.89 | 6 | 1.6 | Two-time divided input | 0.9+0.7 | <0.0 03 | 8.1 | 27.9 | 4,110 | 36.3 | ○ |

Referring to the results of Example 6, Example 9, and Comparative Example 1 using concentrated brine 1 as a raw material, it can be seen that the filtration rate increased by about 53% and about 37%, respectively, and the cake detachability was improved.

Referring to the results of Examples 1 to 5 and Comparative Example 2 using concentrated brine 2 as a raw material, it can be seen that the filtration rate of Examples 1 to 5 increases by about 30% to 74% compared to Comparative Example 2 and the cake detachability is also improved.

Referring to the results of Example 7, Example 10, and Comparative Example 3 using concentrated brine 3 as a raw material, it can be seen that the filtration rate of Example 7 and Example 10 increases by about 63% and about 39%, respectively, compared to Comparative Example 3 and the cake detachability is also improved.

Referring to the results of Example 8, Example 11, and Comparative Example 4 using concentrated brine 4 as a raw material, it can be seen that the filtration rate of Example 7 and Example 10 increases by about 47% and about 36%, respectively, compared to Comparative Example 3 and the cake detachability is also improved.

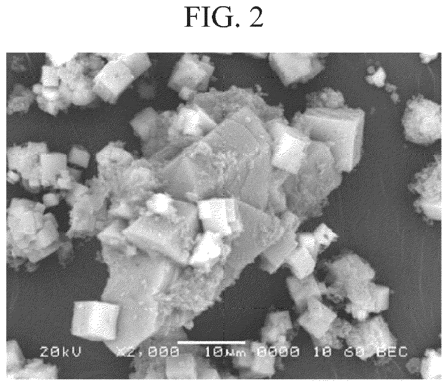

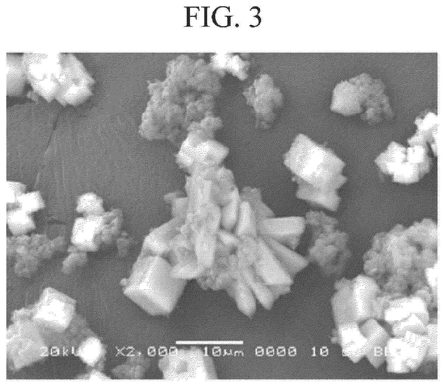

FIG. 2 is an SEM image of a precipitated precipitate according to Example 4 of the present invention. FIG. 3 is an SEM image of a precipitated precipitate according to Comparative Example 2 of the present invention.

Referring to FIGS. 2 and 3, it can be seen that the precipitated precipitate according to Example 4 of the present invention has a relatively large particle diameter compared to the precipitated precipitate according to Comparative Example 2.

From the above experimental results, it can be seen that when the initial pH was controlled low by adjusting the input ratio of the alkaline material, the filtration rate of the precipitate increases by about 30% to 80%, and the cake detachability is also improved.

Therefore, it can be seen that by increasing the filtration rate and improving the cake detachability, in the process of removing Mg in brine, a cycle time may be shortened and a filter cloth replacement cycle may extend. In addition, it is determined that the productivity of the process of removing Mg in brine may be improved and the economic efficiency of the entire process may be improved.

The present invention is not limited to the exemplary embodiments, but may be manufactured in a variety of different forms, and those of ordinary skill in the art to which the present invention pertains will understand that the present invention may be implemented in other specific forms without changing the technical spirit or essential features of the present invention. Therefore, it should be understood that the above-mentioned exemplary embodiments are exemplary in all aspects but are not limited thereto.

## Claims

1. A method of removing Mg in brine, comprising:
preparing concentrated brine;
precipitating a precipitate with a controlled particle diameter by stepwise inputting an alkaline material into the concentrated brine; and
separating the precipitated precipitate.

2. The method of claim 1, wherein:
the precipitating of the precipitate with the controlled particle diameter by stepwise inputting the alkaline material into the concentrated brine includes
a first step of inputting the alkaline material and a second step of inputting the alkaline material.

3. The method of claim 2, wherein:
in the first step of inputting the alkaline material and the second step of inputting the alkaline material,
the alkaline material is input at a ratio ranging from 1:0.5 to 1:20 on a molar basis.

4. The method of claim 1, wherein:
in the precipitating of the precipitate with the controlled particle diameter by stepwise inputting the alkaline material into the concentrated brine,
in a particle diameter distribution of the precipitate, a particle diameter D10 at which a cumulative volume is 10% ranges from 7.0 µm to 9.0 µm.

5. The method of claim 1, wherein:
in the precipitating of the precipitate with the controlled particle diameter by stepwise inputting the alkaline material into the concentrated brine,
in the particle diameter distribution of the precipitate, a spread D50/D10 ranges from 3 to 4.

6. The method of claim 1, wherein:
in the preparing of the concentrated brine,
a concentration of a lithium (Li) component ranges from 0.5 g/L to 20 g/L,
a concentration of a magnesium (Mg) component ranges from 2g/L to 40g/L, and
brine with a concentration ratio of a sulfur (S) component and the Mg component ranging from 0.5 to 2 is prepared.

7. The method of claim 1, wherein:
in the separating of the precipitated precipitate,
the concentration of the Mg component in the brine from which the precipitate is separated is 0.003 g/L or less.

8. The method of claim 2, wherein:
after the first step of inputting the alkaline material, a pH value ranges from 8 to 9.5, and
after the second step of inputting the alkaline material, a pH value ranges from 11 to 12.

9. The method of claim 1, wherein:
in the precipitating of the precipitate with the controlled particle diameter by stepwise inputting the alkaline material into the concentrated brine,
the alkaline material is a calcium-containing material.
